# EUROPÄISCHE PATENTSCHRIFT

(11) **EP 1 249 637 B1**
(45) Veröffentlichungstag und Bekanntmachung des Hinweises auf die Patenterteilung: **05.10.2005**
(21) Anmeldenummer: 02004819.5
(22) Anmeldetag: 02.03.2002
(51) Int. Cl.: F16F 13/30, F16F 9/53

(54) **Vorrichtung zur Unterdrückung von Schwingungen an einem bewegten System**
Device for the suppression of vibrations of a moving system
Dispositif pour la suppression de vibrations d'un système bougeant

(30) Priorität: 10.04.2001 DE 10117817
(43) Veröffentlichungstag der Anmeldung: 16.10.2002
(73) Patentinhaber: Bayerische Motoren Werke Aktiengesellschaft, 80809 München (DE)
(72) Erfinder: Roetsch, Karl, 85229 Markt Indersdorf (DE)

(56) Entgegenhaltungen:
- DE-A- 19 711 689
- FR-A- 2 579 283
- US-A- 5 284 330
- PATENT ABSTRACTS OF JAPAN vol. 007, no. 145 (M-224), 24. Juni 1983 (1983-06-24) & JP 58 057536 A (KINUGAWA GOMU KOGYO KK), 5. April 1983 (1983-04-05)

## Beschreibung

Die Erfindung betrifft eine Vorrichtung zum Dämpfen oder zur Unterdrückung von Schwingungen an einem bewegten System, insbesondere einem Fahrzeug-Antriebsaggregat, in Form eines Aggregat-Lagers oder eines Tilgers, das oder der eine mit einem magnetorheologischen Fluid befüllte Kammer aufweist, in der ein Magnetfeld erzeugt werden kann. Zum technischen Umfeld wird insbesondere auf die DE 197 11 689 A1 verwiesen, welche die Merkmale des Oberbegriffs von Anspruch 1 zeigt.

Die Erfindung betrifft ferner ein hydraulisches Motorlager und einen aktiven Schwingungstilger, welche beide eine Vorrichtung nach Anspruch 1 umfassen.

Ohne die vorliegende Erfindung auf diesen Anwendungsfall beschränken zu wollen, wird zunächst ein bevorzugter Anwendungsbereich für die Erfindung erläutert, nämlich der Bereich der Motorlager, über welche die insbesondere als Hubkolben-Brennkraftmaschinen ausgebildeten Fahrzeug-Antriebsaggregate in der Karosserie von Kraftfahrzeugen, insbesondere Personenkraftwagen gelagert werden. Aufgrund der Eigendynamik dieser Maschinen ist es erforderlich, diese geeignet im Fzg.-Aufbau zu lagern, derart, dass störende Schwingungen möglichst nicht in den Fzg.-Aufbau eingeleitet werden.

Bekannt sind in diesem Zusammenhang bspw. schaltbare hydraulische Motorlager, die insbesondere bei Dieselmotoren eingesetzt werden und die gegenüber ungesteuerten Lagern den Vorteil haben, dass die hydraulische Tilger-/Dämpfungsfunktion vorzugsweise im Leerlaufbetrieb des Dieselmotors abgeschaltet werden kann, so dass in diesem Zustand ein besseres Isolationsverhalten erzielt wird. Allerdings ist hierbei auch das hinsichtlich den von der Fahrbahn kommenden Anregungen wichtige niederfrequente Schwingungsverhalten deutlich verschlechtert. Zu diesem bekannten Stand der Technik wird bspw. auf die DE 43 25 730 C2 oder die EP 0 643 238 B1 verwiesen. Bekannt sind ferner steifigkeitssteuerbare Lager, bei denen anstelle bzw. zusätzlich zur Hydraulik auch die statische Grundsteifigkeit verändert wird, vgl. bspw. die DE 198 12 387 C1. Auch diese Lager eignen sich aus dem bereits genannten Grund praktisch nur für eine Umschaltung zwischen einer Maschinen-Abstützung im Leerlauf-Betrieb und einer Abstützung bei Drehmomentabgabe oder Leistungsabgabe (= Fahrbetrieb).

Bekannt sind ferner sog. aktive Tilger oder Lager. Diese erhöhen durch eine gezielt erzeugte und der unerwünschten Schwingungs-Anregung entgegenwirkende Kraft über einem relativ weiten Frequenzbereich den Schwingungs- und Akustikkomfort. Ein Einsatz ist sowohl im Maschinen-Leerlauf als auch im Fahrbetrieb, d.h. bei Drehmomentabgabe der Maschine sinnvoll möglich. Hierzu wird zum bekannten Stand der Technik bspw. auf die DE 195 17 630 C2, die DE 43 15 184 C2, die EP 0 976 946 A1, die EP 0 655 566 A1 oder die EP 0 937 909 A2 verwiesen.

Weiteren bekannten Stand der Technik bilden die magnetorheologischen Flüssigkeiten (abgekürzt: MRF). Diese weisen in einem Magnetfeld neben der (bekannten) Viskositätsänderung auch die Eigenschaft auf, selbst magnetisch zu werden, d.h. die ferromagnetischen Partikel dieser Flüssigkeiten können vereinfacht als kleine Stabmagnete betrachtet werden.

Der Einsatz von MRF in Lagerungselementen erfolgt derzeit ausschließlich unter Ausnützung des Effektes der Viskositätsänderung, um damit in Abhängigkeit vom jeweiligen Betriebszustand des Systems durch Steuerung eines Magnetfeldes die Dämpfungseigenschaften des Lagers zu verändern sowie um ggf. auch Bremskräfte bzw. Bremsmomente zu erzeugen. Entsprechende Vorrichtungen sind z.B. in der WO 00/68595 beschrieben und der Einsatz eines solchen steuerbaren Dämpfers ist in WO 97/10118 beansprucht. Ein mehrdimensional wirkendes Dämpfungselement auf Basis eines magnetorheologischen Fluids (MRF) ist in WO 96/33356 veröffentlicht. Schließlich ist eine Nutzung von MRF zur Änderung der Federrate eines Lagerelements in der eingangs bereits genannten DE 197 11 689 A1 beschrieben.

Bereits erwähnt wurde der bekannte Nachteil schaltbarer hydraulischer Motorlager, nämlich dass praktisch keine gleichzeitige Verbesserung von Akustikkomfort und niederfrequentem Schwingungskomfort möglich ist, d.h. dass diese Lager praktisch nur für eine Akustikverbesserung im Maschinen-Leerlauf geeignet sind. Den gleiche Nachteil zeigen steifigkeitssteuerbare Lager sowie - entsprechend der bisherigen Verwendung - Lager mit magnetorhoelogischen Flüssigkeiten/Fluiden. Aktive Tilger oder Lager stellen aufwändige und damit teure Konstruktionen dar, die einen stark vergrößerten Bauraum erfordern und neben einem hohen Gewicht einen relativ großen Energiebedarf aufweisen.

Hier soll nun ein Konzept zum Dämpfen oder zur Unterdrückung von Schwingungen nach dem Oberbegriff des Anspruchs 1 aufgezeigt werden, welches sich durch deutlich gesteigerte Einsatzmöglichkeiten auszeichnet (= Aufgabe der Erfindung).
Die Lösung dieser Aufgabe ist dadurch gekennzeichnet, dass der Stromfluss vorgesehen ist, damit die elektrischen Leiter, die zumindest in einem Teilbereich

der Kammer vorgesehen sind, zusätzlich zum Magnetfeld als Beschleunigungsvorrichtung auf zumindest einen Teil des magnetorheologisches Fluids einwirken und dieses in eine oszillierende Bewegung versetzen, um hiermit störende Erregerschwingungen des bewegten Systems gezielt zu bedämpfen, indem bei konstantem oder gesteuertem Magnetfeld in den Leitern ein oszillierender Stromfluss oder bei im wesentlichen konstantem Stromfluss in den Leitern ein oszillierendes Magnetfeld erzeugbar ist. Vorteilhafte Aus- und Weiterbildungen sind Inhalt der Unteransprüche.

Vorgeschlagen wird somit, die magnetorheologische Flüssigkeit nicht nur mit einem konstanten oder gesteuerten Magnetfeld zu beaufschlagen, sondern zusätzlich einen oder mehrere stromdurchflossene Leiter durch das magnetorheologische Fluid hindurchzuführen, da durch diese eine zusätzliche Kraft auf die magnetorheologische Flüssigkeit bzw. auf die darin enthaltenen Partikel ausgeübt werden kann. Wenn nämlich - wie zunächst vorgeschlagen - in den elektrischen Leitern ein oszillierender Stromfluss erzeugt wird, so resultiert hieraus eine oszillierende Krafteinwirkung, die demzufolge idealerweise zur Bedämpfung oder Unterdrückung von Schwingungen eingesetzt werden kann.

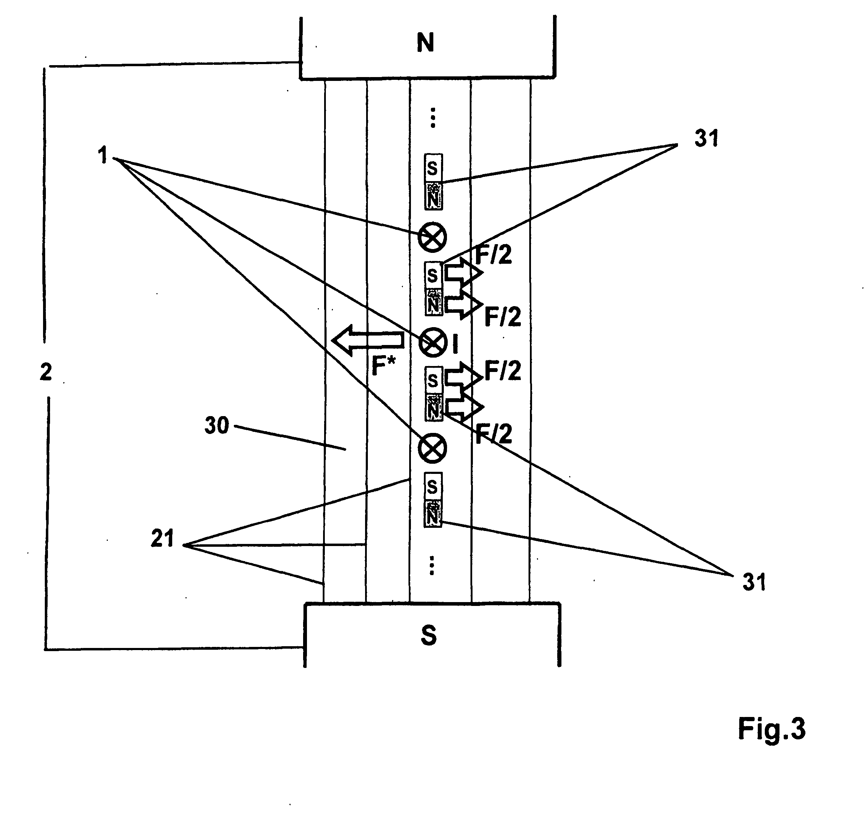

Zur Erläuterung der physikalischen Grundlagen wird zunächst auf die als **Figur 3** beigefügte Prinzipskizze verwiesen. Wie bereits erwähnt wurde, weisen magnetorheologische Flüssigkeiten (MRF) in einem Magnetfeld neben der Viskositätsänderung auch die Eigenschaft auf, selbst magnetisch zu werden, d.h. die ferromagnetischen Partikel 31 dieser Flüssigkeiten können vereinfacht als kleine Stabmagnete (mit Nordpol N und Südpol S) betrachtet werden. Diese Eigenschaft kann erfindungsgemäß unter Zuhilfenahme des an sich bekannten physikalischen Effekts der "LorentzKraft" dazu genützt werden, dass auf die MRF 30 bzw. auf deren Partikel 31 eine in Richtung und Größe gesteuerte Kraft ausgeübt wird. Entsprechend **Figur 3** sind hierzu in einem Magnetfeld, welches zwischen den beiden Magnetpolen N und S eines das magnetorheologische Fluid 30 bzw. dessen MRF-Partikel 31 umgebenden Magneten, insbesondere Elektro-Magneten 2 verläuft, senkrecht (hier in der dritten Dimension, d.h. senkrecht zur Zeichenebene) zu den magnetischen Feldlinien 21 zueinander parallel verlaufende elektrische Leiter 1 oder Leitungen 1 so angeordnet, dass die Lorentz-Kraft, die gemäß der dem Fachmann bekannten "Rechte-Hand-Regel" aus dem Stromfluss in diesen Leitern 1 resultiert, mit ihrer Richtung F* in der bezüglich der magnetischen Feldlinien 21 zweiten Dimension senkrecht auf den magnetischen Feldlinien 21 steht.

Wenn der elektrische Strom in den zueinander parallelen Leitungen 1 gleich groß und gleichgerichtet ist, wird den ferromagnetischen Partikeln 21 der MRF 30 eine rein translatorisch wirkende Kraft aufgeprägt, denn wie dargestellt wirken auf die zwischen den elektrischen Leitern 1 liegenden "Stabmagnet"-Partikel 31 quasi zwei Gegenkräfte vom Betrag F/2 zur vom Leiter 1 ausgeübten Kraft F*, die eine Beschleunigung des jeweiligen Partikels 31 in Richtung der Pfeile F/2 bewirken.

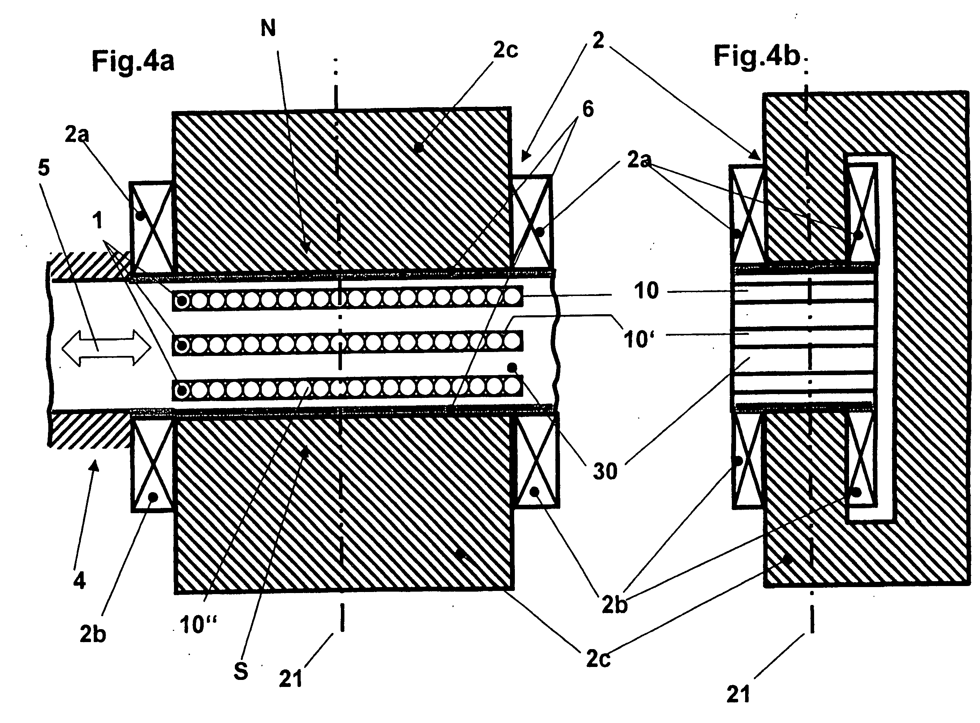

Werden nun, wie die Prinzipdarstellung nach **Figur 4a** zeigt, mehrere elektrische Leiter 1 in einer zu den Magnet-Feldlinien 21 senkrechten Ebene nebeneinanderliegend angeordnet und bevorzugt zu jeweils einem plattenförmigen Verbund 10 zusammengefasst, und werden weiterhin mehrere derartige Verbunde 10, 10', 10" in Richtung der magnetischen Feldlinien 21 betrachtet hintereinander (mit Abstand aufeinanderfolgend) angeordnet, so entsteht aus einer mit MRF 30 befüllten Kammer 4 ein sog. Kanalelement zur Beschleunigung der magnetorheologischen Flüssigkeit 30. Dabei ist die das magnetorheologische Fluid 30 enthaltende Kammer 4 (oder das Kanalelement 4) zumindest teilweise von einem Magneten 2, insbesondere einem Elektro-Magneten 2 - hier bestehend aus Magnetspulen 2a, 2b sowie einem Kern 2c aus Weicheisen - umgeben. Ist dann der (Elektro-)Magnet 2 aktiviert, so verlaufen dessen zueinander parallele Magnet-Feldlinien 21, von denen in den **Figuren 4a, 4b** der Übersichtlichkeit halber lediglich eine einzige dargestellt ist, senkrecht zu dem oder den Leiter-Verbund(en) 10, 10', 10". Die einzelnen elektrischen Leiter 1 in diesen Leiter-Verbunden 10, 10', 10" sind dabei abermals senkrecht (in der dritten Dimension, d.h. bei **Fig.4a** senkrecht zur Zeichenebene) zu den magnetischen Feldlinien 21 angeordnet.

Dieses Kanalelement oder diese Kammer 4 ist bei der Prinzipdarstellung nach **Figur 4a,** die einen Längsschnitt durch diese Kammer 4 zeigt, während in **Figur 4b** der entsprechende Querschnitt dargestellt ist, endseitig offen, jedoch ist dies für die Erläuterung des grundlegenden Prinzips noch unerheblich. Fakt ist, dass bei aktiviertem Elektro-Magneten 2, welcher die Kammer 4 umgibt, und somit bei Existenz eines entsprechenden Magnetfeldes in der mit MRF 30 befüllten Kammer 4 auf dieses magnetorheologische Fluid 30 gemäß Pfeilrichtung 5 oszillierende Kräfte ausgeübt werden, wenn in den elektrischen Leitungen 1 oder Leitern 1 ein oszillierender Stromfluss erzeugt wird. Bei aktivem Magnetfeld sowie gleichsinnigem und gleichstarkem oszillierenden Stromfluss in den Leiter-Verbunden 10, 10', 10" kann somit zumindest ein Teil des magnetorheologischen Fluides 30 im wesentlichen parallel zur Ebene des plattenförmigen Verbundes 10 (usw.) in eine oszillierende Bewegung gemäß Pfeil 5 versetzt werden.

Der soeben beschriebene Effekt kann im übrigen auch durch Anlegen eines oszillierenden, d.h. seine Richtung wechselnden Magnetfeldes erzielt werden, wenn in den elektrischen Leitern 1 ein im wesentlichen konstanter Stromfluss erzeugt wird. Der Nordpol N und der Südpol S des oder der ggf. mehrfach vorhandenen Elektromagneten 2 muss bzw. müssen hierzu ausreichend schnell umgetauscht werden.

Noch Bezug nehmend auf **Figur 4a** kann es vorteilhaft sein, wenn die der MRF 30 zugewandte Innenwand der Kammer 4 im Bereich des Elektro-Magneten 2 eine Schicht 6 von nichtmagnetischem Material aufweist, um ein Haften bzw. "Ankleben" der magnetisierten Fluid-Partikel (31) an den Kanalwänden im Bereich der Pole N, S des Elektro-Magneten 2 zu verhindern. Beispielsweise ist dies durch eine Beschichtung mit einer nicht magnetischen Folie umsetzbar.

Wie bereits angesprochen wurde, kann eine derartige mit MRF 30 befüllte Kammer 4 oder ein derartiges Kanalelement 4 mit umgebendem Elektromagneten 2 sowie integrierten elektrischen Leitern 1 oder Leiter-Verbunden 10, 10', 10", usw. zur insbesondere oszillierenden Beschleunigung des magnetorheologischen Fluids 30 verwendet werden. Somit können bspw. bzw. bevorzugt durch geeignete Initiierung eines oszillierenden Stromflusses in den als Beschleunigungsvorrichtung (für diese wird in den weiteren im folgenden erläuterten Figuren die Bezugsziffer 40 verwendet) für das magnetorheologische Fluid 30 fungierenden elektrischen Leitern 1 störende Erregerschwingungen eines bewegten Systems gezielt bedämpft werden, wenn diese Kammer 4 in geeigneter Weise auf dieses bewegte System einwirken kann. Beispielsweise kann diese Kammer 4 oder dieses Kanalelement 4 hierzu in ein Lager für dieses bewegte System integriert oder als sog. an sich bekannter aktiver Tilger ausgestaltet werden. Auf diese beiden möglichen Ausführungsformen wird später noch näher eingegangen.

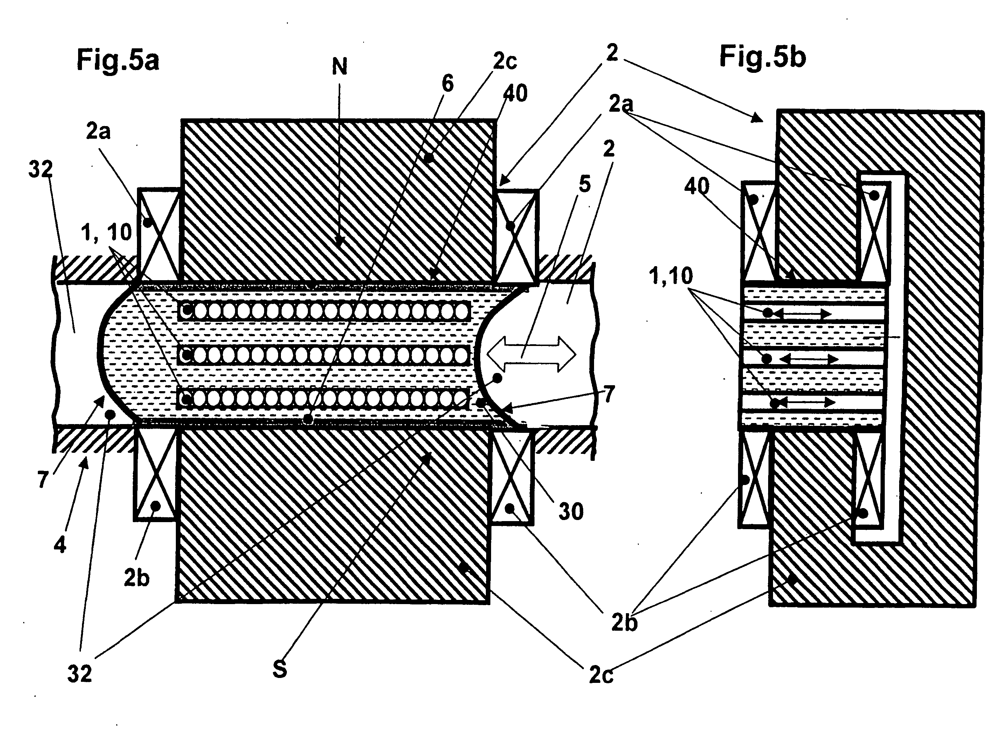

Zunächst wird jedoch anhand der Prinzipdarstellung der **Figuren 5a, 5b** (analog den Figuren 4a, 4b zeigt Fig.5b einen Schnitt durch die Schnittdarstellung gemäß Fig.5a) noch eine weitere grundlegende Ausgestaltung erläutert. Um nämlich mögliche Nachteile der MRF 30 (z.B. bezüglich Viskosität oder Dichte) im Hinblick auf die gewünschte Dämpfungs- bzw. Tilgerwirkung zu eliminieren, kann es zweckmäßig sein, die MRF 30 lediglich im Bereich der sog. Beschleunigungsvorrichtung 40 (diese wird wie bereits erläutert durch den Elektromagneten 2 sowie die Leiterverbunde 10, 10' usw. gebildet) zu verwenden und im übrigen Hydrauliksystem des Dämpfers, Lagers oder Tilgers eine andere, "ideale" Dämpfungsflüssigkeit einzusetzen. Durch Vorsehen jeweils einer flüssigkeits-undurchlässigen Membrane 7 an den beiden abseits des umgebenden Elektromagneten 2 liegenden Stirnseiten der Beschleunigungsvorrichtung 40 kann die in der MRF 30 erzeugte Beschleunigungswirkung auf eine sich benachbart der Mambrane 7 (und dabei abseits der Beschleunigungsvorrichtung 40, dabei ggf. jedoch weiterhin in der Kammer 4) befindende "ideale" Dämpfungsflüssigkeit 32 übertragen werden.

Dies ist in **Fig.5a** durch den Doppelpfeil 5 lediglich prinzipiell dargestellt. Durch geeignete oszillierende Bestromung der elektrischen Leiter 1 kann demzufolge nicht nur die magnetorheologische Flüssigkeit 30 in der Beschleunigungsvorrichtung 40, sondern auch die Dämpfungsflüssigkeit 32, die sich in der Kammer 4 auf den der MRF 30 abgewandten Seiten der beiden Membranen 7 befindet, in eine oszillierende Bewegung gemäß Peilrichtung 5 versetzt werden. Im übrigen besteht ein weiterer Vorteil dieses Lösungsansatzes im Vermeiden störender Effekte an den Grenzen des vom Elektro-Magneten 2 erzeugten Magnetfeldes.

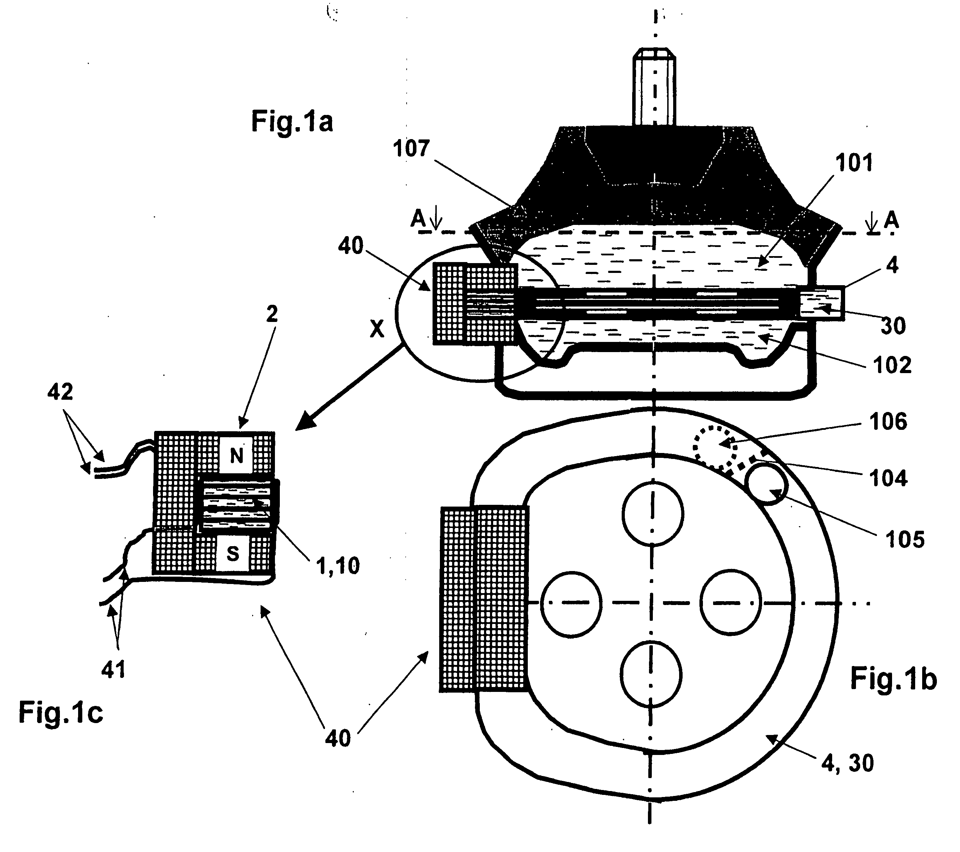

Eine soweit beschriebene Vorrichtung bzw. eine entsprechend geeignet gestaltete Kammer 4 bzw. Beschleunigungsvorrichtung 40 mit MRF 30 sowie einem Magneten 2 und Leitern 1 bzw. Leiter-Verbunden 10, 10', usw. kann nun - wie bereits angedeutet wurde - Bestandteil eines hydraulischen Motorlagers (insbesondere für den Antriebs-Motor eines Kraftfahrzeuges) sein, so wie dies figürlich beispielhaft in der beigefügten **Figur 1a** dargestellt ist. Diese **Fig.1a** zeigt einen Querschnitt durch ein mit Ausnahme der erfindungsgemäßen Vorrichtung im wesentlichen übliches hydraulisches Motorlager, wobei in **Fig.1b** der Schnitt A-A aus **Fig.1a** und in **Fig.1c** die Detailansicht X aus **Fig.1a** dargestellt ist.

Das insbesondere in **Fig.1a** dargestellte Motorlager weist neben den üblichen und daher nicht näher erläuterten Abstütz- und Befestigungselementen eine - an sich übliche - obere Fluidkammer 101, die nach oben hin von einem Elastomer-Tragkörper 107 begrenzt ist, sowie eine - an sich übliche - untere Fluidkammer 102 auf. Zwischen diesen beiden Fluidkammern 101, 102 befindet sich ein (im wesentlichen übliches und daher nicht näher erläutertes Trennwandsystem 103. Im wesentlichen in der Höhe dieses Trennwandsystems 103 ist eine erfindungsgemäße Kammer 4 in Form eines das Trennwandsystem 103 umgebenden Ringkanals vorgesehen, wobei ein Teilbereich dieser Kammer 4 oder dieses hier ringförmigen Kanalelementes 4, die oder das mit elektrorheologischer Flüssigkeit 30 befüllt ist, mit einer erfindungsgemäßen Beschleunigungsvorrichtung 40, bestehend aus dem Elektro-Magneten 2 sowie mehreren wie bereits erläutert angeordneten elektrischen Leitern 1 oder Leiter-Verbunden 10, 10', 10" usw. versehen ist.

Wie aus **Fig.1b** hervorgeht, ist zwischen dem Innenraum der Ring-Kammer 4 und der oberen Fluidkammer 101 ein Übertritt 105 bzw. eine Kanalöffnung 105 vorgesehen, über den oder die eine fluidische Verbindung zwischen dem Innenraum der Kammer 4 und der oberen Fluidkammer 101 besteht. In gleicher Weise ist ein weiterer Übertritt 106 (oder eine weitere Kanalöffnung 106) zwischen dem Innenraum der Ring-Kammer 4 und der unteren Fluidkammer 102 des Motorlagers vorgesehen. Zwischen diesen beiden Übertritten 105, 106 befindet sich in der Ring-Kammer 4 bzw. im Ring-Kanalelement 4 eine Trennwand 104. Durch die Übertritte 105, 106 können nun oszillierende Bewegungen des in der Kammer 4 befindlichen magnetorheologischen Fluids 30 in die obere Fluidkammer 101 sowie in die untere Fluidkammer 102 eingeleitet bzw. übertragen werden.

Diese Vorrichtung nach **Fig.1a,b** kann somit als Aktuator z.B. im gezeigten hydraulischen Motorlager verwendet werden. Hierbei wird die MRF 30 derart oszillierend hin- und herbewegt, dass durch die infolge der Beschleunigung hervorgerufenen Massenkräfte einer äußeren Anregung entgegengewirkt wird. Ein derartiges Motorlager besitzt dann zum einen die bekannten Eigenschaften eines heute üblichen Hydrolagers, darüber hinaus können durch entsprechende Ansteuerung der Beschleunigungsvorrichtung 40 störende Erregerschwingungen gezielt bedämpft und damit aus dem Übertragungsweg (im beschriebenen Anwendungsfall vom Antriebs-Motor eines Kraftfahrzeugs in die Fahrzeug-Karosserie) herausgefiltert werden.

**Figur 1c** zeigt noch die Detailansicht der Beschleunigungsvorrichtung 40 mit den Verbunden 10, 10' usw. der elektrischen Leiter 1 und deren elektrischen Anschluss 41 sowie den elektrischen Anschluss 42 für den Elektromagneten 2. Ferner sei darauf hingewiesen, dass bei diesem Ausführungsbeispiel nach den **Fig.1a,b** die magnetorheologische Flüssigkeit 30 in direktem fluidischen Kontakt mit dem Fluid in den Fluidkammern 101 und 102 steht, d.h. auch in diesen befindet sich MRF 30, jedoch könnte abweichend hiervon an den Übertritten 105, 106 zwischen der Ring-Kammer 4 und den Fluidkammern 101, 102 jeweils eine Membran 7 (wie in **Fig.5a** dargestellt) vorgesehen sein, so dass dann die MRF 30 der Beschleunigungsvorrichtung 40 über die an den quasi Kammer-Stirnseiten vorgesehenen Membranen indirekt mit der oberen und der unteren Fluidkammer eines ansonsten im wesentlichen üblichen hydraulischen Motorlagers in Verbindung steht.

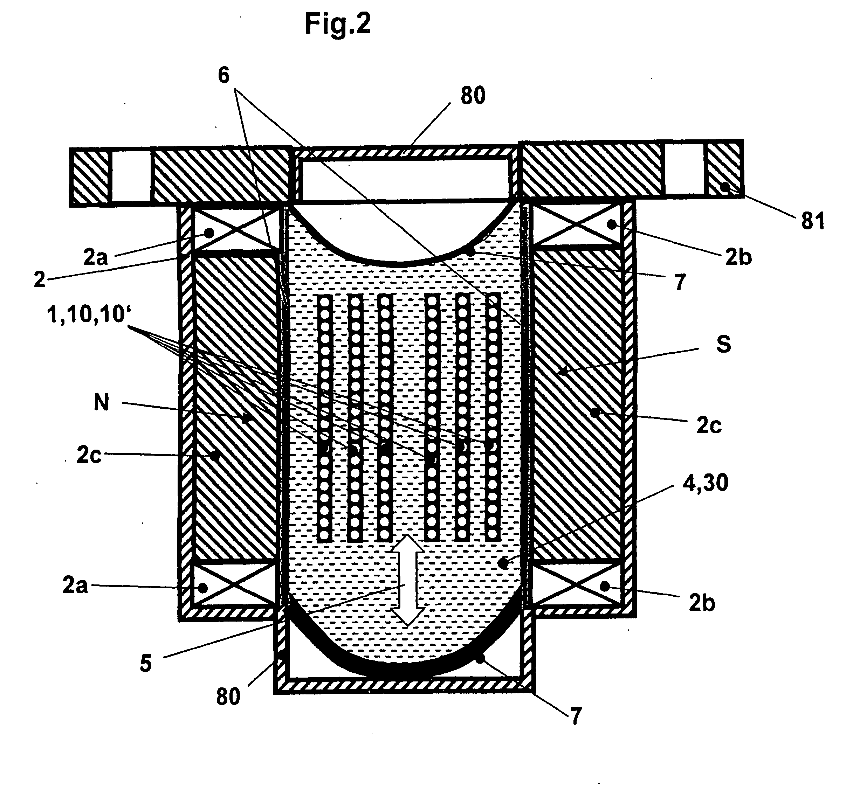

Ein weiterer Anwendungsfall für eine erfindungsgemäße Vorrichtung ist ein sog. aktiver Schwingungs-Tilger, d.h. dass die geeignet gestaltete Kammer 4 mit dem magnetorheologischen Fluid 30 sowie der Beschleunigungsvorrichtung 40 für dieses Fluid ein Bestandteil eines aktiven Schwingungs-Tilgers ist. Ein bevorzugtes Ausführungsbeispiel hierfür ist prinzipiell in der beigefügten **Figur 2** (im Schnitt) dargestellt.

Mit der Bezugsziffer 80 ist das Gehäuse dieses aktiven Schwingungs-Tilgers bezeichnet, das ferner einen Befestigungsflansch 81 aufweist, mit welchem dieser Tilger an dem bewegten System, dessen Schwingungen es zu dämpfen oder zu unterdrücken gilt, befestigt werden kann. Innerhalb des Gehäuses 80 befindet sich neben dem Elektromagneten 2 die mit magnetorheologischem Fluid 30 befüllte Kammer 4 mit integrierten Verbunden 10 (usw.) von elektrischen Leitern 1. Dabei ist die Kammer 4 an den beiden Stirnseiten, d.h. abseits des Elektromagneten 2, von Membranen 7 begrenzt, zwischen denen die MRF 30 eingeschlossen ist.

Durch geeignete oszillierende Bestromung der elektrischen Leiter 1 kann die magnetorheologische Flüssigkeit 30 in der Kammer 4 in eine oszillierende Bewegung gemäß Peilrichtung 5 versetzt werden. Mit Ausführung dieser oszillierenden Bewegung wird wie ersichtlich abwechselnd die in **Fig.2** untere Membran 7 an die Innenseite des unteren Abschnittes des Gehäuses 80 bzw. die in **Fig.2** obere Membran 7 an die Innenseite des oberen Abschnittes des Gehäuses 80 zur Anlage gebracht, so dass das Gehäuse 80 praktisch eine Anschlagfunktion bezüglich der an den Stirnseiten der Kammer 4 vorgesehenen Membranen 7 ausübt. Die Membranen 7 selbst üben bei dieser oszillierenden Bewegung gemäß Pfeil 5 quasi die Funktion einer Rückstellfeder aus.

Mit der beschriebenen Vorrichtung lässt sich auf neue Weise eine aktive Dämpfung bzw. Unterdrückung von Schwingungen unter Verwendung von MRF realisieren, wobei die Frequenz der erzeugbaren sog. "Gegenschwingung" in weitem Bereich durch geeignete Wahl der Frequenz des oszillerenden Stromflusses beliebig einstellbar ist. Ausdrücklich darauf hingewiesen sei, dass - wie bereits eingangs dargestellt wurde - anstelle des osziliernden Stromflusses auch das Magnetfeld in seiner Richtung oszillierend gestaltet werden kann, und zwar durch geeignetes Umpolen des Elektromagneten 2 (bei im wesentlichen konstantem Stromfluss in den elektrischen Leitern 1). Diese Vorrichtung eignet sich somit (für die beschriebenen Anwendungsfälle) praktisch für sämtliche möglichen Betriebszustände, d.h. bei Verwendung als Motorlager oder aktiver Motor-Schwingungs-Tilger erhält man gegenüber dem bisherigen Stand der Technik eine erhebliche Funktionsverbesserung sowohl im Leerlauf als auch im Fahrbetrieb des Fahrzeug-Antriebsaggregates. Dabei zeichnet sich die erfindungsgemäße Vorrichtung gegenüber den derzeit bekannten aktiven Systemen durch einen einfacheren Aufbau aus und ist damit kostengünstiger und robuster. Ferner besteht ein geringerer Platzbedarf, und das Gewicht sowie der Energiebedarf ist gegenüber den bisher bekannten Systemen verringert.

Es sei noch erwähnt, dass durch entsprechende Ansteuerung (z.B. wechselndes Magnetfeld ohne elektrischem Strom oder Magnetfeld in Verbindung mit einander entgegengesetzten Stromrichtungen in den verschiedenen elektrischen Leitern 1) auf die ferromagnetischen Partikel 31 der MRF 30 ein reines Drehmoment ohne Translationskraft ausgeübt werden kann. Dies kann z.B. dazu genützt werden, infolge der dabei entstehenden inneren Reibungswärme das magnetorheologische Fluid 30 ausgehend vom kalten Zustand vor Inbetriebnahme der Vorrichtung auf eine günstige Betriebstemperatur zu bringen. Ebenso kann durch entsprechende Ansteuerung ein "Rühreffekt" erzeugt werden, der dazu genützt werden kann, evtl. auftretende Sedimentationserscheinungen in der MRF 30 rückgängig zu machen bzw. zu verhindern, was beides im übrigen auch durch ein oszillierendes Magnetfeld erreichbar ist und wobei noch darauf hingewiesen sei, dass durchaus eine Vielzahl von Details (insbesondere konstruktiver Art) abweichend von obigen Erläuterungen gestaltet sein kann, ohne den Inhalt der Patentansprüche zu verlassen.

### Bezugszeichenliste:

- 1: elektrische(r) Leiter / Leitung
- 2: (Elektro-)Magnet
- 2a,b: Magnetspule (von 2)
- 2c: Weicheisen-Kern (von 2)
- 4: Kammer / Kanalelement
- 5: oszillierende Bewegungsrichtung
- 6: Schicht aus nichtmagnetischem Material
- 7: Membran
- 10("): Leiter-Verbund
- 21: magnetische Feldlinien
- 30: magnetorheologische(s) Flüssigkeit / Fluid (MRF)
- 31: Partikel in MRF
- 32: Dämpfungsflüssigkeit
- 40: Beschleunigungsvorrichtung
- 41: elektrischer Anschluss von 1, 10, 10' usw.
- 42: elektrischer Anschluss von 2
- 80: Gehäuse (eines Tilgers)
- 81: Befestigungsflansch
- 101: obere Fluidkammer eines hydraulischen Motorlagers
- 102: untere Fluidkammer eines hydraulischen Motorlagers
- 103: Trennwandsystem zwischen 101 und 102
- 104: Trennwand in 4 zwischen 106 und 105
- 105: Übertritt / Kanalöffnung zwischen 4 und 101
- 106: Übertritt / Kanalöffnung zwischen 4 und 102

## Patentansprüche

1. Vorrichtung zum Dämpfen oder zur Unterdrückung von Schwingungen an einem bewegten System, insbesondere einem Fahrzeug-Antriebsaggregat, in Form eines Aggregat-Lagers oder eines Tilgers, das oder der eine mit einem magnetorheologischen Fluid (MRF, 30) befüllte Kammer (4) aufweist, in der ein Magnetfeld erzeugt werden kann, wobei zumindest ein Teilbereich der Kammer (4) von mehreren elektrischen Leitern (1), in denen ein Stromfluss erzeugbar ist, durchdrungen ist,
**dadurch gekennzeichnet, dass** der Stromfluss vorgesehen ist, damit die Leiter (1) zusätzlich zum Magnetfeld als Beschleunigungsvorrichtung (40) auf zumindest einen Teil des magnetorheologisches Fluids (30) einwirken und dieses in eine oszillierende Bewegung (Pfeil 5) versetzen, um hiermit störende Erregerschwingungen des bewegten Systems gezielt zu bedämpfen, indem bei konstantem oder gesteuertem Magnetfeld in den Leitern (1) ein oszillierender Stromfluss oder bei im wesentlichen konstantem Stromfluss in den Leitern (1) ein oszillierendes Magnetfeld erzeugbar ist.

2. Vorrichtung nach Anspruch 1,
**dadurch gekennzeichnet, dass** mehrere elektrische Leiter (1) im wesentlichen parallel nebeneinander liegend zu einem plattenförmigen Verbund (10) zusammengefasst sind, derart, dass zumindest ein Teil des magnetorheologischen Fluids (30) bei aktivem Magnetfeld durch einen oszillierenden Stromfluss oder bei im wesentlichen konstantem Stromfluss und oszillierendem Magnetfeld im wesentlichen parallel zur Ebene des plattenförmigen Verbundes (10) in eine oszillierende Bewegung (Pfeil 5) versetzbar ist.

3. Vorrichtung nach Anspruch 2,
**dadurch gekennzeichnet, dass** in der Kammer (4) mehrere plattenförmige Verbunde (10, 10', 10") mit elektrischen Leitern (1) im wesentlichen zueinander parallel angeordnet sind.

4. Vorrichtung nach einem der vorangegangenen Ansprüche,
**dadurch gekennzeichnet, dass** die das magnetorheologische Fluid (30) enthaltende Kammer (4) zumindest teilweise von zumindest einem Elektromagneten (2) umgeben ist, dessen zwischen seinen Magnetpolen (N, S) verlaufende Magnetfeldlinien (21) im wesentlichen senkrecht zu dem oder den Leiter-Verbund(en) (10, 10') stehen.

5. Vorrichtung nach einem der vorangegangenen Ansprüche,
**dadurch gekennzeichnet, dass** die Kammer (4) jeweils stirnseitig mit einer Membran (7) verschlossen ist.

6. Vorrichtung nach einem der vorangegangenen Ansprüche,
**dadurch gekennzeichnet, dass** eine Innenwand der Kammer (4) im Bereich der (Elektro-)Magneten (2) eine Schicht (6) von nichtmagnetischem Material aufweist.

7. Vorrichtung nach einem der vorangegangenen Ansprüche,
wobei durch geeignete Initiierung eines oszillierenden Stromflusses in den als Beschleunigungsvorrichtung (40) für das magnetorheologische Fluid (30) fungierenden elektrischen Leitern (1) und/oder durch Anlegen eines oszillierenden Magnetfeldes das magnetorheologische Fluid (30) erwärmbar ist.

8. Vorrichtung nach einem der vorangegangenen Ansprüche,
wobei durch geeignete Initiierung eines oszillierenden Stromflusses in den als Beschleunigungsvorrichtung (40) für das magnetorheologische Fluid (30) fungierenden elektrischen Leitern (1) und/oder durch Anlegen eines oszillierenden Magnetfeldes im magnetorheologischen Fluid (30) ein Verwirbelungseffekt erzeugbar ist.

9. Hydraulisches Motorlager mit einer Vorrichtung nach einem der vorangegangenen Ansprüche,
**dadurch gekennzeichnet, dass** die geeignet gestaltete Kammer (4) mit dem magnetorheologischen Fluid (30) Bestandteil des hydraulischen Motorlagers ist und direkt oder über an den Kammer-Stirnseiten vorgesehenen Membranen indirekt mit der oberen und der unteren Fluidkammer (101, 102) eines ansonsten im wesentlichen üblichen hydraulischen Motorlagers in Verbindung steht.

10. Hydraulisches Motorlager nach Anspruch 9,
**dadurch gekennzeichnet, dass** die Kammer (4) in Form eines Ringkanals ausgebildet ist, der im wesentlichen zwischen der oberen und unteren Fluidkammer (101, 102) des hydraulischen Motorlagers liegend diese Fluidkammern im wesentlichen umgibt.

11. Aktiver Schwingungstilger mit einer Vorrichtung nach einem der Ansprüche 1 - 8,
**dadurch gekennzeichnet, dass** die geeignet gestaltete Kammer (4) mit dem magnetorheologischen Fluid (30) Bestandteil des aktiven Schwingungs-Tilgers ist, dessen Gehäuse (80) eine Anschlagfunktion bezüglich an den Kammer-Stirnseiten vorgesehenen Membranen (7) ausübt.

## Claims

1. A device for damping or suppressing vibrations in a moving system, especially a vehicle drive unit, in the form of a unit bearing or a damper, which has a chamber (4) filled with a magneto-rheological fluid (MRF, 30), in which a magnetic field can be generated, at least one sub-region of the chamber (4) being penetrated by a plurality of electric conductors (1), in which a current flow can be generated, **characterised in that** the current flow is provided so that the conductors (1), in addition to the magnetic field, act as an acceleration device (40) on at least some of the magneto-rheological fluid (30) and set it into an oscillating movement (arrow 5), in order to thereby damp disruptive exciter vibrations of the moving system in a targeted manner, **in that** an oscillating current flow can be generated in the conductors (1) when there is a constant or controlled magnetic field or an oscillating magnetic field can be generated when there is a substantially constant current flow in the conductors (1).

2. A device according to claim 1, **characterised in that** a plurality of electric conductors (1), lying substantially parallel next to one another, are combined to form a plate-shaped composite (10), in such a way that at least some of the magneto-rheological fluid (30) can be set into an oscillating motion (arrow 5) substantially parallel to the plane of the plate-shaped composite (10) when there is an active magnetic field owing to an oscillating current flow or when there is a substantially constant current flow and oscillating magnetic field.

3. A device according to claim 2, **characterised in that** a plurality of plate-shaped composites (10, 10', 10") with electric conductors (1) are arranged substantially parallel to one another in the chamber (4).

4. A device according to any one of the preceding claims, **characterised in that** the chamber (4) containing the magneto-rheological fluid (30) is at least partially surrounded by at least one electro-magnet (2), the magnetic field lines (21) of which running between its magnetic poles (N, S) are substantially perpendicular to the conductor composite(s) (10, 10').

5. A device according to any one of the preceding claims, **characterised in that** the chamber (4) is closed in each case on the end face with a membrane (7).

6. A device according to any one of the preceding claims, **characterised in that** an inner wall of the chamber (4) has a layer (6) of non-magnetic material in the region of the (electro) magnets (2).

7. A device according to any one of the preceding claims, wherein the magneto-rheological fluid (30) can be heated by suitable initiation of an oscillating current flow in the electric conductors (1) acting as an acceleration device (40) for the magneto-rheological fluid (30) and/or by applying an oscillating magnetic field.

8. A device according to any one of the preceding claims, wherein a swirl effect can be generated by suitable initiation of an oscillating current flow in the electric conductors (1) acting as an acceleration device (40) for the magneto-rheological fluid (30) and/or by applying an oscillating magnetic field in the magneto-rheological fluid (30).

9. An hydraulic engine bearing with a device according to any one of the preceding claims, **characterised in that** the suitably designed chamber (4) with the magneto-rheological fluid (30) is a component of the hydraulic engine bearing and is connected directly, or indirectly via membranes provided on the end faces of the chamber, to the upper and the lower fluid chamber (101, 102) of an otherwise substantially conventional hydraulic engine bearing.

10. An hydraulic engine bearing according to claim 9, **characterised in that** the chamber (4) is designed in the form of an annular channel which, substantially lying between the upper and lower fluid chamber (101, 102) of the hydraulic engine bearing, substantially surrounds these fluid chambers.

11. An active vibration damper comprising a device according to any one of claims 1 to 8, **characterised in that** the suitably formed chamber (4) with the magneto-rheological fluid (30) is a component of the active vibration damper, the housing (80) of which exerts a stop function with respect to the membranes (7) provided on the end faces of the chamber.

## Revendications

1. Dispositif pour amortir ou supprimer des vibrations dans un système mobile, notamment un groupe moteur de véhicule automobile, sous la forme d'un palier de groupe ou d'un amortisseur, qui présente une chambre (4) remplie d'un fluide magnétorhéologique (MRF, 30) dans laquelle est produit un champ magnétique, au moins une partie de la chambre (4) étant traversée par plusieurs conducteurs électriques (1) dans lesquels peut être produit un flux de courant,
**caractérisé en ce que**
le flux de courant est prévu pour que les conducteurs (1) agissent en supplément du champ magnétique, comme dispositifs d'accélération (40) sur au moins une partie du fluide magnétorhéologique (30), en déplaçant celui-ci selon un mouvement oscillant (flèche 5) pour ainsi amortir de manière ciblée les vibrations d'excitation parasites du système mobile, cela pouvant être obtenu avec un champ magnétique constant ou piloté, en faisant passer dans les conducteurs (1) un flux de courant oscillant ou, dans le cas d'un flux de courant essentiellement constant dans les conducteurs (1), en produisant un champ magnétique oscillant.

2. Dispositif selon la revendication 1,
**caractérisé en ce que**
plusieurs conducteurs électriques (1) essentiellement parallèles et côte juxtaposés, sont réunis pour former un groupe (10) en forme de plaque, de manière qu'au moins une partie du fluide magnétorhéologique (30) peut être déplacée, quand le champ magnétique est actif, par un flux de courant oscillant, ou quand le flux de courant est essentiellement constant, par un champ magnétique oscillant, ce déplacement s'effectuant avec oscillation (flèche 5) essentiellement parallèle au plan du groupe (10) en forme de plaque.

3. Dispositif selon la revendication 2,
**caractérisé en ce que**
dans la chambre (4) sont montés essentiellement parallèles entre eux, plusieurs groupes (10, 10', 10") de conducteurs électriques (1), présentant la forme de plaques.

4. Dispositif selon les revendications précédentes,
**caractérisé en ce que**
la chambre (4) contenant le fluide magnétorhéologique (30) est entourée au moins en partie par au moins un électroaimant (2) dont les lignes de champ magnétique (21) situées entre ses pôles (N, S) sont essentiellement perpendiculaires au(x) groupe(s) de conducteurs (10, 10').

5. Dispositif selon une des revendications précédentes,
**caractérisé en ce que**
la chambre (4) est fermée sur chaque face frontale par une membrane (7).

6. Dispositif selon une des revendications précédentes,
**caractérisé en ce qu'**
une paroi interne de la chambre (4), dans la zone de l'électroaimant (2), présente une couche (6) d'un matériau non magnétique.

7. Dispositif selon une des revendications précédentes,
**caractérisé en ce que**
en initiant de manière appropriée un flux de courant oscillant dans les conducteurs électriques (1) fonctionnant comme dispositif d'accélération (40) pour le fluide magnétorhéologique (30), et/ou en appliquant un champ magnétique oscillant, on peut échauffer le fluide magnétorhéologique (30).

8. Dispositif selon une des revendications précédentes,
**caractérisé en ce que**
en initiant de manière appropriée un flux de courant oscillant dans les conducteurs électriques (1) fonctionnant comme dispositif d'accélération (40) pour le fluide magnétorhéologique (30), et/ou en appliquant un champ magnétique oscillant, on peut créer un effet de tourbillon dans le fluide magnétorhéologique (30).

9. Palier hydraulique de moteur avec un dispositif selon une des revendications précédentes,
**caractérisé en ce que**
la chambre (4) de configuration appropriée avec le fluide magnétorhéologique (30) est un composant du palier hydraulique de moteur et se trouve en relation directement, ou indirectement par les membranes prévues sur les faces frontales de la chambre, avec la chambre supérieure et la chambre inférieure de fluide (101, 102) d'un palier de moteur hydraulique essentiellement usuel pour le reste.

10. Palier hydraulique de moteur selon la revendication 9,
**caractérisé en ce que**
la chambre (4) a la forme d'un canal annulaire qui se trouve essentiellement entre la chambre supérieure et la chambre inférieure de fluide (101, 102) du palier hydraulique de moteur et qui entoure essentiellement ces chambres.

11. Amortisseur actif de vibrations comprenant un dispositif selon une des revendications 1 à 8,
**caractérisé en ce que**
la chambre (4) de configuration appropriée avec le fluide magnétorhéologique (30) est un composant de l'amortisseur actif de vibrations dont le boîtier (80) assure une fonction de butée pour les membranes (7) prévues sur les faces frontales de la chambre.
